(19) Europäisches Patentamt
European Patent Office
Office européen des brevets

(11) **EP 2 390 766 B1**

(12) **EUROPEAN PATENT SPECIFICATION**

(45) Date of publication and mention
of the grant of the patent:
**25.09.2013   Bulletin 2013/39**

(51) Int Cl.:
***G06F 3/041*** *(2006.01)*

(21) Application number: **10164364.1**

(22) Date of filing: **28.05.2010**

(54) **Electronic device including touch-sensitive display and method of controlling same**

Elektronische Vorrichtung mit  berührungsempfindlicher Anzeige und Verfahren zu deren Steuerung

Dispositif électronique incluant un affichage sensible au toucher et son procédé de contrôle

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**30.11.2011   Bulletin 2011/48**

(73) Proprietor: **BlackBerry Limited
Waterloo ON N2L 3W8 (CA)**

(72) Inventor: **Tong, Kuo-Feng
Waterloo Ontario N2L 3W8 (CA)**

(74) Representative: **Roberts, Gwilym Vaughan et al
Kilburn & Strode LLP
20 Red Lion Street
London WC1R 4PJ (GB)**

(56) References cited:
**EP-A1- 2 241 955      CA-A1- 2 316 067
US-A1- 2006 197 753      US-A1- 2009 243 817
US-A1- 2010 013 777      US-A1- 2010 053 116**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Description

FIELD OF TECHNOLOGY

The present disclosure relates to electronic devices including but not limited to portable electronic devices having touch-sensitive displays and their control.

BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, wireless PDAs, and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed.

US 2010/013777 discloses an electronic device that includes a display screen disposed on a front side of the electronic device and a screen-reflective interface disposed on a backside of the electronic device. Respective positions on the screen-reflective interface correspond to respective locations on the display screen. The screen-reflective interface includes a touch-sensitive component that is adapted to sense the location of a touch on the screen-reflective interface and a pressure sensitive component that is adapted to detect a press on the screen-reflective interface. The electronic device also comprises a detection unit that detects a touch on the touch-sensitive component of the screen-reflective interface. The detection unit also determines when a press input is detected by the pressure sensitive component. When the touch-sensitive component detects a touch at a particular location on the screen-reflective interface, an interface icon is displayed on at a location on the display screen that corresponds to the location of the touch on the screen-reflective interface. As the location of the touch on the screen-reflective interface moves, the interface icon moves to locations on the display screen that correspond to the location of the touch on the screen-reflective interface. When a press input is detected on the screen-reflective interface, a tactile feedback mechanism provides tactile feedback by, for example, shaking or vibrating the device that correspond to the location of the touch on the screen-reflective interface.

U.S. Patent Publication 2010/053116 a touch screen device that includes a touch sensor layer and a force sensor layer stacked with the touch sensor layer. The touch sensor layer is configured to receive touch input. The force sensor layer includes an array of individual force sensors, where each force sensor is configured to receive a force input. Different location on the touch sensor layer are associated with specific force sensors in the array. The touch signal and the force signal are utilized in cooperation to determine position and force information about a user's input on the touch screen device.

CA 2,316,067 discloses a multi-touch sensor pad input device that includes an array of regularly spaced apart transducers, a contact pad extending over the array, and a sampling and measuring circuit to detect and measure the time, location of application and magnitude of the applied force to each transducer.

EP 2,241,955 discloses an electronic device that comprises a touch screen that is configured for presenting information to a user and for receiving input controlled by the user. The electronic device also includes at least one touch sensor configured for detecting the position of at least one touch action made by a user on the touch screen, and at least two force sensors configured for detecting at least one pressure action made by the user on the touch screen, subsequent to the at least one touch action, and where the at least one pressure action is registered as an input to the electronic device. The electronic device also includes a processing unit configured for calculating which of a position of a first touch action, of the at least one touch action, and a position of a second touch action, of the at least one touch action, that a first pressure action, of the at least one pressure action, corresponds, to , if the first touch action and the second a touch action are present at the touch screen substantially simultaneously and the first pressure action is detected subsequently. The processing unit is also configured to deduce which input to register in the electronic device based on the first pressure action.

Improvements in devices with touch-sensitive displays are desirable.

The invention is set out in the claims.

SUMMARY

According to the present invention, there is provided a method in claim 1 and an electronic device in claim 7.

**BRIEF DESCRIPTION OF THE DRAWINGS**

FIG. 1 is a block diagram of a portable electronic device in accordance with the present disclosure.

FIG. 2 is a front view of an example of a portable electronic device in accordance with the present disclosure.

FIG. 3 is a sectional view through line 202 of FIG. 2 in accordance with the present disclosure.

FIG. 4 is a functional block diagram showing components of the portable electronic device in accordance with the present disclosure.

FIG. 5 is a flowchart illustrating a method of controlling a portable electronic device in accordance with the present disclosure.

FIG. 6 illustrates touch locations on a touch-sensitive display in accordance with the present disclosure.

**DETAILED DESCRIPTION**

The following describes an electronic device and method of controlling the electronic device. The method includes detecting a first touch at a first location and a second touch at a second location on a touch-sensitive display, determining a first force value by a first sensor and a second force value by a second sensor, wherein the first force value and the second force value are determined at a time when the first touch and the second touch are both detected, and determining a first applied force value for the first touch and a second applied force value for the second touch based on the first force value and the second force value and based on the first location and the second location.

For simplicity and clarity of illustration, reference numerals may be repeated among the figures to indicate corresponding or analogous elements. Numerous specific details are set forth to provide a thorough understanding of the embodiments described herein. The embodiments may be practiced without these specific details. In other instances, well-known methods, procedures, and components have not been described in detail so as not to obscure the embodiments described herein. The description is not to be considered as limited to the scope of the embodiments described herein.

The disclosure generally relates to an electronic device, which in the embodiments described herein is a portable electronic device. Examples of portable electronic devices include mobile, or handheld, wireless communication devices such as pagers, cellular phones, cellular smart-phones, wireless organizers, personal digital assistants, wirelessly enabled notebook computers, and the like. The portable electronic device may also be a portable electronic device without wireless communication capabilities such as a handheld electronic game device, digital photograph album, digital camera, or other device.

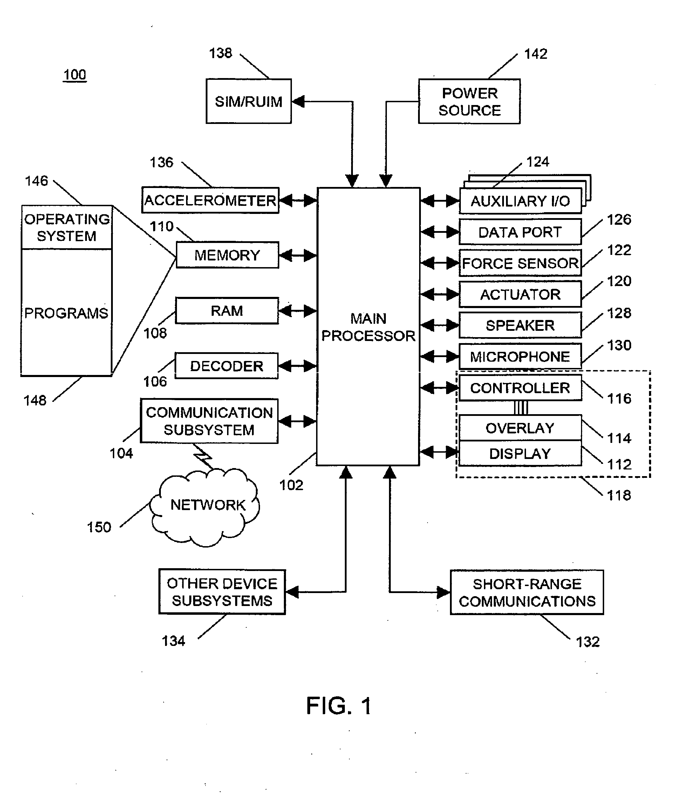

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and dual-mode networks that support both voice and data communications. A power source 142, such as one or more rechargeable batteries or a port to another power supply, powers the portable electronic device 100.

The processor 102 interacts with other devices, such as a Random Access Memory (RAM) 108, memory 110, a display 112 with a touch-sensitive overlay 114 operably coupled to an electronic controller 116 that together comprise a touch-sensitive display 118, one or more actuators 120, a plurality of force sensors 122, an auxiliary input/output (I/O) subsystem 124, a data port 126, a speaker 128, a microphone 130, short-range communications 132 and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may also interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into the memory 110.

The portable electronic device 100 also includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, or surface acoustic wave (SAW) touch-sensitive display, as known in the art. A capacitive touch-sensitive display includes the display 112 and a capacitive touch-sensitive overlay 114. The overlay 114 may be an assembly of multiple layers in a stack including, for example, a substrate, LCD display 112, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118 and processed by the controller 116, for example, to determine a location of a touch. Touch location data may include a single point of contact, such as a point at or near a center of the area of contact, or the entire area of contact for further processing. The location of a touch detected on the touch-sensitive display 118 may include x and y components, e.g., horizontal and vertical with respect to one's view of the touch-sensitive display 118, respectively. For example, the x component may be determined by a signal generated from one touch sensor layer, and the y component may be determined by a signal generated from another touch sensor layer. A signal is provided to the controller 116 in response to detection of a suitable object, such as a finger, thumb, or other items, for example, a stylus, pen, or other pointer, depending on the nature of the touch-sensitive display 118. More than one simultaneous location of contact may occur and be detected.

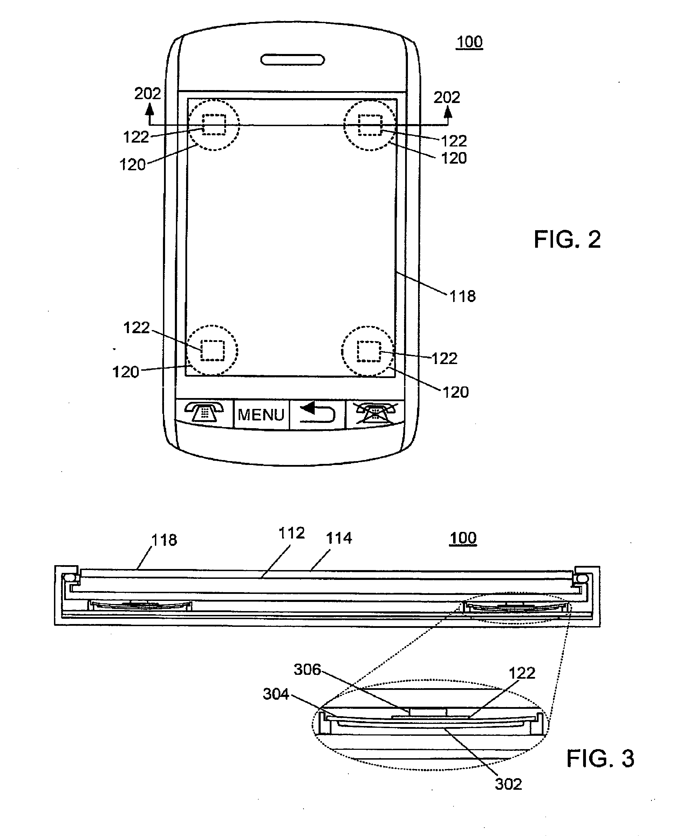

The actuator 120 may comprise one or more piezoelectric (piezo) actuators that provide tactile feedback. A front view of an example of a portable electronic device 100 is shown in FIG. 2. The actuator 120 comprises four piezo actuators 120, each located near a respective corner of the touch-sensitive display 118. FIG. 3 is a sectional side view of the portable electronic device 100 through the line 202 of FIG 2. Each piezo actuator 120 is supported within the portable electronic device 100 such that contraction of the piezo actuators 120 imparts a force on the touch-sensitive display 118, opposing a force externally imparted on the display 118. Each piezo actuator 120 includes a piezoelectric device 302, such as a piezoelectric disk, adhered to a substrate 304, such as a metal substrate. An element 306 that is advantageously at least partially flexible and comprises, for example, hard rubber may be located between the piezo device 302 and the touch-sensitive display 118. The element 306 does not substantially dampen the force imparted on the touch-sensitive display 118. In the example of FIG. 2, four force sensors 122 are utilized, with each force sensor 122 located between an element 306 and the substrate 304. The substrate 304 bends when the piezo device 302 contracts diametrically due to build up of charge/voltage at the piezo device 302 or in response to an external force imparted on the touch-sensitive display 118. The charge/voltage may be adjusted by varying the applied voltage or current, thereby controlling the force imparted by the piezo actuators 120 on the touch-sensitive display 118. The charge/voltage on the piezo actuators 120 may be removed by a controlled discharge voltage/current that causes the piezo device 302 to expand diametrically, decreasing the force imparted by the piezo actuators 120 on the touch-sensitive display 118. Absent an external force imparted on the overlay 114 and absent a charge/voltage on the piezodevice 302, the piezo actuator 120 may be slightly bent due to a mechanical preload.

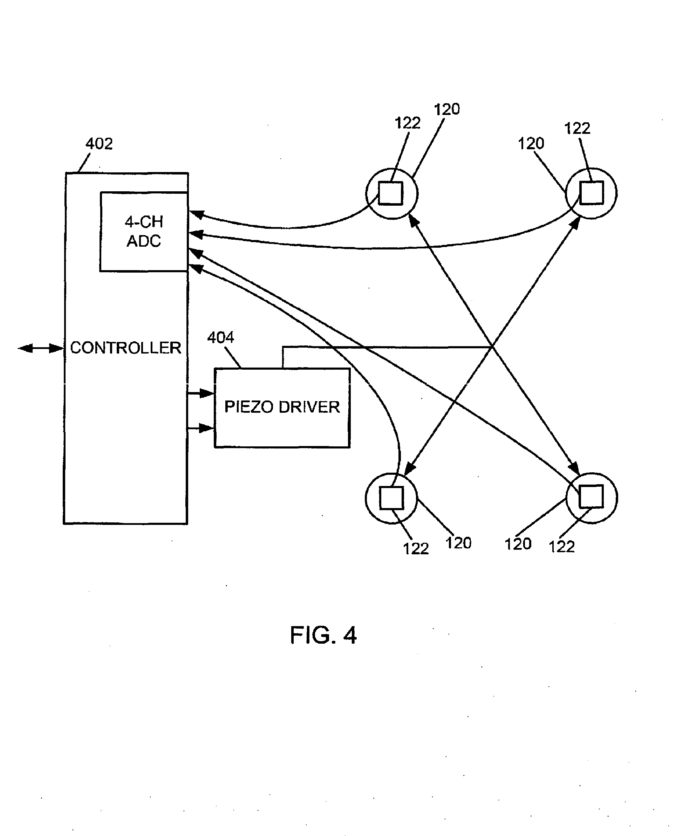

FIG. 4 shows a functional block diagram of components of the portable electronic device 100. In this example, each force sensor 122 is coupled to a controller 402, which includes an amplifier and analog-to-digital converter (ADC). The force sensors 122 may be, for example, force-sensing resistors in an electrical circuit wherein the resistance changes with force imparted on the force sensors 122. As force imparted on the touch-sensitive display 118 increases, the resistance decreases. This change is determined via the controller 402 for each of the force sensors 122. Each force sensor 122 is calibrated to determine a force value, referred to herein as the measured force. The measured forces by the four force sensors 122 may differ depending on the location of the force imparted on the touch-sensitive display 118. For example, a force imparted by a touch at an off-center location on the touch-sensitive display 118 results in a higher measured force at the force sensor 122 nearest the touch location than the measured forces at the force sensors 122 that are farther away from the touch location.

The piezo actuators 120 are coupled to a piezo driver 404 that communicates with the controller 402. The controller 402 is also in communication with the main processor 102 of the portable electronic device 100 and may receive and provide signals to the main processor 102. The piezo driver 404 may optionally be embodied in drive circuitry between the controller 402 and the actuators 120. The controller 402 controls the piezo driver 404 that controls the voltage/current to the piezoelectric devices 302 and thus controls the charge/voltage and the force imparted by the piezo actuators 120 on the touch-sensitive display 118. Each of the piezoelectric devices 302 may be controlled substantially equally and concurrently. Optionally, the piezoelectric devices 302 may be controlled separately. Collapse and release of a dome switch may be simulated. Other switches, actuators, keys, and so forth may be simulated, or a non-simulated tactile feedback may be provided.

The mechanical work performed by the piezo actuators 120 may be controlled to provide generally consistent force and movement of the touch-sensitive display 118 in response to detection of a touch on the touch-sensitive display 118. Fluctuations in mechanical work performed, for example, as a result of temperature variation, may be reduced by adjusting the voltage/current to control the charge/voltage.

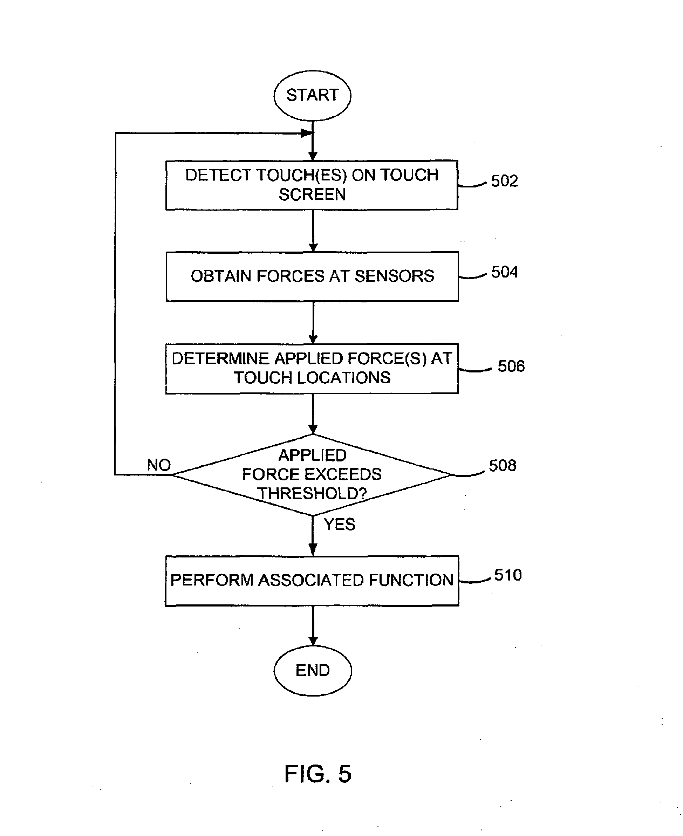

A flowchart illustrating a method of controlling a portable electronic device is shown in FIG. 5. The method may be carried out by computer-readable code executed, for example, by the processor 102. Computer-readable code executable by at least one processor of the portable electronic device to perform the method may be stored in a computer-readable medium. Coding of software for carrying out such a method is within the scope of a person of ordinary skill in the art given the present description. The method may contain additional or fewer processes than shown and/or described, and may be performed in a different order.

Two touches on the touch-sensitive overlay 114 of the touch-sensitive display 118 are detected 502 and the locations of the touches are determined. Force values at the force sensors 122 are determined 504. An applied force value at each touch location is determined 506. An applied force value is a value related to the force imparted at a location on the touch-sensitive display 118. When the applied force value for each touch does not meet a threshold force, as determined at 508, the process continues at 502. An applied force value meets a threshold force when the applied force value is at or beyond the threshold force. When the applied force value for either of the touches meets the threshold force, as determined at 508, an associated function is performed 510. For example, the charge/voltage at the piezo actuators 120 may be modified to impart a force to simulate collapse of a dome switch. A selection of a feature may be made when the location of the touch, for which the applied force value exceeds the threshold force, is associated with a selectable feature on the touch-sensitive display 118. The flowchart of FIG. 5 is simplified for the purpose of explanation. The process may be repeated as further touches are detected.

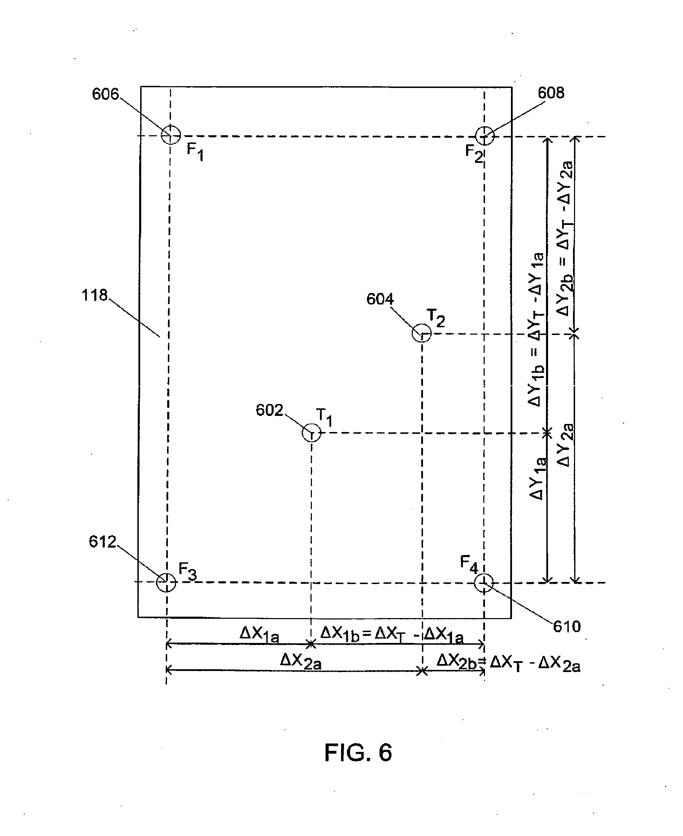

An example of the method of controlling a portable electronic device in accordance with the present embodiment is described with reference to FIG. 6, which illustrates touch locations on a touch-sensitive display 118. In the on or awake state of the portable electronic device 100, selectable features are displayed on the touch-sensitive display 118. Such selectable features may include, for example, icons for selection of an application for execution by the processor 102, buttons for selection of options, keys of a virtual keyboard, keypad or any other suitable features. Two touches are detected at a first location 602 and a second location 604 on the touch-sensitive display 118. When a force is imparted on the touch-sensitive display 118, four force values are determined from signals from each of the force sensors 122.

The applied force value of each touch is determined by the processor 102 based on the force values determined utilizing each of the force sensors 122 and based on the touch locations for the first and second touches. The applied force value for each touch is determined, in this example, from a force balance equation, referred to as "force balance," based on the force values at the force sensors and based on a torque balance equation, referred to as "torque balance," utilizing the force values at the force sensors 122 and distances along at least one coordinate axis of each of the first and second touches from the force sensors 122. In the example illustrated in FIG. 6, a $F_{T1}$ is a force value related to force imparted by the first touch at the first location 602, and a $F_{T2}$ is a force value related to force imparted by a the second touch at the second location 604 on the touch-sensitive display 118. The four force values $F_1$, $F_2$, $F_3$, $F_4$ are determined at the four locations 606, 608, 610, 612 of the force sensors 122. Because $F_1$, $F_2$, $F_3$, $F_4$ are measured, these forces are related to the first and second forces imparted on the touch-sensitive display 118, and thus the first and second applied force values, e.g., by the force balance:

$$F_{T1} + F_{T2} = F_1 + F_2 + F_3 + F_4$$

When a single touch is detected, the measured force values are attributed to the single touch such that $F_{T1} = F_1 + F_2 + F_3 + F_4$.

When two touches $T_1$ and $T_2$ are detected, the applied force values $F_{T1}$ and $F_{T2}$ at the touches may be resolved. The coordinate distances, (x-coordinate distances and y-coordinate distances, from the first location 602 to the locations 606, 608, 610, 612 of the force sensors may be determined based on the location of each touch. The coordinate distances and force values are related by the torque balance:

$$F_{T1} \times \Delta X_{1A} + F_{T2} \times \Delta X_{2A} - (F_2 + F_4) \times \Delta X_T = 0$$

where $\Delta X_{1A}$ is an x coordinate distance from the first location 602 to the location of the measured force value $F_1$; $\Delta X_{2A}$ is an x coordinate distance from the second location 604 to the location of the measured force value $F_1$; and

$\Delta X_T$ is the total x coordinate distance between the measured force value $F_1$ and the measured force value $F_2$.

With the force and torque balance, the applied force value $F_{T1}$ at the first location 602 and the applied force value $F_{T2}$ at the second location 604 may be resolved because the distances $\Delta X_{1A}$, $\Delta X_{2A}$, $\Delta X_T$ are determined and the forces at the force sensors, the measured force values $F_1$, $F_2$, $F_3$, $F_4$, are determined.

A determination is made whether or not one or both of the applied force values meet a minimum threshold force. Thus, the applied force values $F_{T1}$ at the first location 602 and $F_{T2}$ at the second location 604 are compared to a threshold force. When the applied force value at either of the touch locations meets the threshold force, a function or functions are performed. For example, when the applied force value at the first location 602 meets the threshold force, the charge at the piezo actuators 120 may be modified to simulate collapse of a dome switch to provide the user with tactile feedback. A selectable feature at a location on the touch-sensitive display 118 that corresponds to the location of the first touch 602 is selected.

In the above example, the two touches have different X coordinate distances from each touch location 602, 604 to the location of the measured force $F_1$. When, the X coordinate distances are equal where $\Delta X_{1A} = \Delta X_{2A}$, for example, the force balance and torque balance may be carried for the Y-axis as:

$$F_{T1} \times \Delta Y_{1A} + F_{T2} \times \Delta Y_{2A} - (F_3 + F_4) \times \Delta Y_T = 0$$

where $\Delta Y_{1A}$ is an Y coordinate distance from the first location 602 to the location of the measured force value $F_1$; $\Delta Y_{2A}$ is an Y coordinate distance from the first location 602 to the location of the measured force value $F_1$; and $\Delta Y_T$ is the total Y coordinate distance between the measured force value $F_1$ and the measured force value $F_3$.

In another example, the applied force value $F_{T1}$ at the first location 602 and the applied force value $F_{T2}$ at the second location 604 are both determined by a force and torque balance based on the x-coordinate distances. The applied force value $F_{T1}$ at the first location 602 and the applied force value $F_{T2}$ at the second location 604 are also determined by a force and torque balance based on the y-coordinate distances. Multiple determinations of applied force values $F_{T1}$ and $F_{T2}$ may be utilized for increased reliability of the determined applied force values, for example, when the x-coordinate distances are close.

In another example, the applied force values may be compared to determine the touch at which a greater force is imparted. A determination may be made whether or not the greater of the two determined applied force values meets a minimum threshold force. The charge at the piezo actuators 120 may be modified to simulate collapse of a dome switch to provide the user with a positive tactile feedback when the applied force value at a touch meets the minimum threshold. A selectable feature at a location on the touch-sensitive display 118 that corresponds to the location at which the greater force is imparted may be selected.

The measured force values $F_1$, $F_2$, $F_3$, $F_4$ at the force sensors in the above examples are utilized to determine the applied force values related to detected touch on the touch-sensitive display 118. In another example, the force values at the force sensors may be adjusted depending on the orientation of the portable electronic device 20. Thus, depending on the orientation, as determined based on signals from the accelerometer 136, the force values $F_1$, $F_2$, $F_3$, $F_4$ may be adjusted to compensate for the mass of the touch-sensitive display 118 and the force of gravity.

The electronic device includes force sensors and a touch-sensitive display. Touches on the touch-sensitive display are detected and the location of each of the touches on the touch-sensitive display is determined. Force sensors are used to determine force values related to the forces near, for example, the force sensor of the touch-sensitive display when a touch is detected on the touch-sensitive display. The force values and the location of the touches may be utilized to determine the respective applied force value at each of two touch locations on the touch-sensitive display. The determination of respective applied force values may be utilized to distinguish, for example, an inadvertent touch from a selection of a feature on the display or other input. An input to the portable electronic device may be determined based on the applied force values and tactile feedback may be provided when a threshold force is met. When multiple simultaneous touches are detected, the method provides a identification of one of the touches to determine which selection is input.

The present disclosure may be embodied in other specific forms without departing from its essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

**Claims**

1. A method comprising:

detecting a first touch (T1) at a first location (602) and a second touch (T2) at a second location (604) on a touch-sensitive display (118) of an electronic device (100);

determining a first force value (F1) on the touch-sensitive display (118) utilizing a first sensor (122) of the electronic device (100), a second force value (F2) on the touch-sensitive display (118) utilizing a second sensor (122) of the electronic device (100), a third force value (F3) on the touch-sensitive display (118) utilizing a third sensor (122) of the electronic device (100) and a fourth force value (F4) on the touch-sensitive display (118) utilizing a fourth sensor (122) of the electronic device (100), the first force value (F1), the second force value (F2), the third force value (F3) and the fourth face value (F4) being determined at a time when the first touch (T1) and the second touch (T2) are both detected; wherein the first, second, third and fourth sensors (122) are each located near a respective corner of the touch sensitive display;

the first sensor and second sensor defining a coordinate X-axis and the first sensor and third sensor defining a coordinate Y-axis where the X-axis and Y axis are orthogonal; determining distances, along the coordinate axes (X, Y) relative to the sensors (122) of the location of each of the first touch (T1) and the second touch (T2); and determining a first applied force value (FT1) for the first touch (T1) and a second applied force value (FT2) for the second touch (T2) by utilizing a force balance technique wherein the force balance technique utilises the first force value (F1), the second force value (F2), the third force value (F3) and the fourth force value (F4); and by utilizing a torque balance technique wherein the torque balance technique utilises the first force value (F1), the second force value (F2), the third force value (F3) and the fourth force value (F4), and the said determined distance of each touch.

2. The method according to claim 1, further comprising determining an orientation of the electronic device (100), wherein determining the first force value (F1) and the second force value (F2) comprises compensating for the orientation of the electronic device (100) based on gravity and a mass of the touch-sensitive display (118).

3. The method according to claim 1, further comprising determining whether a greater applied force value is associated with the first location (602) or the second location (604).

4. The method according to claim 1, further comprising determining an input based on the first applied force value (FT1) and the second applied force value (FT2).

5. The method according to claim 4, further comprising performing a function associated with the input when the greater of the first applied force value (FT1) and the second applied force value (FT2) meets a threshold force value.

6. A computer-readable medium having computer-readable code executable by at least one processor (102) of an electronic device (100) to perform the method of any one of claims 1 to 5.

7. An electronic device (100) comprising:

a touch-sensitive display (118);
a first force sensor (122), a second force sensor (122), a third force sensor (122) and a fourth force sensor (122);
a processor (102) coupled to the first force sensor (122), the second force sensor (122), the third force sensor (122), and the fourth force sensor (122) and the touch-sensitive display (118) wherein the first, second, third and fourth sensors (122) are each located near a respective corner of the touch sensitive display (118), the first sensor and the second sensor defining a coordinate X-axis and the first sensor and third sensor defining a coordinate Y-axis where the X-axis and Y-axis are orthogonal, wherein the device is further configured to:

detect a first touch (T1) at a first location (602) and a second touch (T2) at a second location (604) on the touch-sensitive display (118);
determine a first force value (F1) on the touch-sensitive display (118) utilizing the first force sensor (122), a second force value (F2) on the touch-sensitive display (118) utilizing the second force sensor (122), a third force value (F3) utilizing the third force sensor (122) and a fourth force value (F4) utilizing the force sensor (122) wherein the first force value (F1), the second force value (F2), the third force value (F3) and the fourth force value (F4) are determined at a time when the first touch (T1) and the second touch (T2) are both detected; determining distances, along coordinate axes (X,Y), of each of the first touch (T1) and the second touch (T2) relative to the sensors (122); and
determine a first applied force value (FT1) for the first touch (T1) and a second applied force value (FT2) for the second touch (T2) by utilizing a force balance technique wherein the force balance technique utilises the first force value (F1), the second force value (F2), the third force value (F3) and the fourth force value (F4) and by utilizing a torque balance technique wherein the torque balance technique utilises the first force value (F1), the second force value (F2), the third force value (F3) and the fourth force value (F4) and the said determined distance of each touch.

8. The electronic device according to claim 7, further comprising an accelerometer (136) configured to determine an orientation of the electronic device (100), wherein the processor (102) adjusts the first force value (F1) and the second force value (F2) to compensate for the force of gravity and a mass of the touch-sensitive display (118), based on the orientation of the electronic device (100).

9. The electronic device (100) according to claim 7, wherein each of the first force sensor (122), the second force sensor (122), the third force sensor (122), and the fourth force sensor (122) is positioned near a respective corner of the touch-sensitive display (118).

**Patentansprüche**

1. Verfahren mit:

   Erfassen einer ersten Berührung (T1) an einer ersten Stelle (602) und einer zweiten Berührung (T2) an einer zweiten Stelle (604) an einem berührempfindlichen Bildschirm (118) einer elektronischen Vorrichtung (100); Bestimmen eines ersten Kraftwerts (F1) an dem berührempfindlichen Bildschirm (118) unter Verwendung eines ersten Sensors (122) der elektronischen Vorrichtung (100), eines zweiten Kraftwerts (F2) an dem berührempfindlichen Bildschirm (118) unter Verwendung eines zweiten Sensors (122) der elektronischen Vorrichtung (100), eines dritten Kraftwerts (F3) an dem berührempfindlichen Bildschirm (118) unter Verwendung eines dritten Sensors (122) der elektronischen Vorrichtung (100) und eines vierten Kraftwerts (F4) an dem berührempfindlichen Bildschirm (118) unter Verwendung eines vierten Sensors (122) der elektronischen Vorrichtung (100), wobei der erste Kraftwert (F1), der zweite Kraftwert (F2), der dritte Kraftwert (F3) und der vierte Kraftwert (F4) zu einer Zeit bestimmt werden, wenn sowohl die erste Berührung (T1) als auch die zweite Berührung (T2) erfasst werden, wobei sich der erste, der zweite, der dritte und der vierte Sensor (122) jeweils nahe einer entsprechenden Ecke des berührempfindlichen Bildschirms befinden, wobei der erste Sensor und der zweite Sensor eine Koordinaten-x-Achse definieren und der erste Sensor und der dritte Sensor eine Koordinaten-y-Achse definieren, wobei die x-Achse und die y-Achse rechtwinklig sind, Bestimmen von Distanzen der Stelle jeweils der ersten Berührung (T1) und der zweiten Berührung (T2) bezüglich der Sensoren (122) entlang der Koordinatenachsen (X, Y) und Bestimmen eines ersten Anlagekraftwertes (FT1) für die erste Berührung (T1) und eines zweiten Anlagekraftwertes (FT2) für die zweite Berührung (T2) unter Verwendung einer Kraftausgleichstechnik, wobei die Kraftausgleichstechnik den ersten Kraftwert (F1), den zweiten Kraftwert (F2), den dritten Kraftwert (F3) und den vierten Kraftwert (F4) verwendet, und unter Verwendung einer Drehmomentausgleichstechnik, wobei die Drehmomentausgleichstechnik den ersten Kraftwert (F1), den zweiten Kraftwert (F2), den dritten Kraftwert (F3) und den vierten Kraftwert (F4) und die bestimmte Distanz jeder Berührung verwendet.

2. Verfahren nach Anspruch 1, ferner mit Bestimmen einer Orientierung der elektronischen Vorrichtung (100), wobei das Bestimmen des ersten Kraftwerts (F1) und des zweiten Kraftwerts (F2) ein Kompensieren der Orientierung der elektronischen Vorrichtung (100) aufgrund von Schwerkraft und einer Masse des berührempfindlichen Bildschirms (118) aufweist.

3. Verfahren nach Anspruch 1, ferner mit Bestimmen, ob ein größerer Anlagekraftwert mit der ersten Stelle (602) oder der zweiten Stelle (604) verknüpft ist.

4. Verfahren nach Anspruch 1, ferner mit Bestimmen einer Eingabe aufgrund des ersten Anlagekraftwertes (FT1) und des zweiten Anlagekraftwertes (FT2).

5. Verfahren nach Anspruch 4, ferner mit Durchführen einer Funktion, die mit der Eingabe verknüpft ist, wenn der Größere aus dem ersten Anlagekraftwert (FT1) und dem zweiten Anlagekraftwert (FT2) einen Schwellenwert erreicht.

6. Computerlesbares Medium mit computerlesbarem Code, der von mindestens einem Prozessor (102) einer elektronischen Vorrichtung (100) ausführbar ist, um das Verfahren nach einem der Ansprüche 1 bis 5 durchzuführen.

7. Elektronische Vorrichtung (100) mit:

einem berührempfindlichen Bildschirm (118),
einem ersten Kraftsensor (122), einem zweiten Kraftsensor (122), einem dritten Kraftsensor (122) und einem vierten Kraftsensor (122),
einem Prozessor (102), der mit dem ersten Kraftensor (122) dem zweiten Kraftsensor (122), dem dritten Kraftsensor (122) und dem vierten Kraftsensor (122) und dem berührempfindlichen Bildschirm (118) gekoppelt ist, wobei sich der erste, der zweite, der dritte und der vierte Sensor (122) jeweils nahe einer entsprechenden Ecke des berührempfindlichen Bildschirms (118) befinden, der erste Sensor und der zweite Sensor eine Koordinaten-x-Achse definieren und der erste Sensor und der dritte Sensor eine Koordinaten-y-Achse definieren, wobei die x-Achse und die y-Achse rechtwinklig sind, wobei die Vorrichtung ferner dazu konfiguriert ist:

eine erste Berührung (T1) an einer ersten Stelle (602) und eine zweite Berührung (T2) an einer zweiten Stelle (604) auf dem berührempfindlichen Bildschirm (118) zu erfassen,
einen ersten Kraftwert (F1) an dem berührempfindlichen Bildschirm (118) unter Verwendung des ersten Kraftsensors (122), einen zweiten Kraftwert (F2) an dem berührempfindlichen Bildschirm (118) unter Verwendung des zweiten Kraftsensors (122), einen dritten Kraftwert (F3) unter Verwendung des dritten Kraftsensors (122) und einen vierten Kraftwert (F4) unter Verwendung des vierten Kraftsensors (122) zu bestimmen, wobei der erste Kraftwert (F1), der zweite Kraftwert (F2), der dritte Kraftwert (F3) und der vierte Kraftwert (F4) zu einer Zeit bestimmt werden, wenn sowohl die erste Berührung (T1) als auch die zweite Berührung (T2) erfasst sind,
Distanzen jeweils der ersten Berührung (T1) und der zweiten Berührung (T2) bezüglich der Sensoren (122) entlang von Koordinatenachsen (X, Y) zu bestimmen und
einen ersten Anlagekraftwert (FT1) für die erste Berührung (T1) und einen zweiten Anlagekraftwert (FT2) für die zweite Berührung (T2) unter Verwendung einer Kraftausgleichstechnik, wobei die Kraftausgleichstechnik den ersten Kraftwert (F1), den zweiten Kraftwert (F2), den dritten Kraftwert (F3) und den vierten Kraftwert (F4) verwendet, und unter Verwendung einer Drehmomentausgleichstechnik zu bestimmen, wobei die Drehmomentausgleichstechnik den ersten Kraftwert (F1), den zweiten Kraftwert (F2), den dritten Kraftwert (F3) und den vierten Kraftwert (F4) und die bestimmte Distanz jeder Berührung verwendet.

8. Elektronische Vorrichtung nach Anspruch 7, ferner mit einem Beschleunigungsmesser (136), der dazu konfiguriert ist, eine Orientierung der elektronischen Vorrichtung (100) zu bestimmen, wobei der Prozessor (102) den ersten Kraftwert (F1) und den zweiten Kraftwert (F2) anpasst, um die Kraft von Schwerkraft und einer Masse des berührempfindlichen Bildschirms (118) aufgrund der Orientierung der elektronischen Vorrichtung (100) zu kompensieren.

9. Elektronische Vorrichtung (100) nach Anspruch 7, wobei jeweils der erste Kraftsensor (122), der zweite Kraftsensor (122), der dritte Kraftsensor (122) und der vierte Kraftsensor (122) nahe einer entsprechenden Ecke des berührempfindlichen Bildschirms (118) positioniert sind.

**Revendications**

1. Procédé comprenant :

la détection d'un premier contact (T1) à un premier emplacement (602) et d'un deuxième contact (T2) à un deuxième emplacement (604) sur un afficheur tactile (118) d'un dispositif électronique (100) ;
la détermination d'une première valeur de force (F1) sur l'afficheur tactile (118) en utilisant un premier capteur (122) du dispositif électronique (100), d'une deuxième valeur de force (F2) sur l'afficheur tactile (118) en utilisant un deuxième capteur (122) du dispositif électronique (100), d'une troisième valeur de force (F3) sur l'afficheur tactile (118) en utilisant un troisième capteur (122) du dispositif électronique (100) et d'une quatrième valeur de force (F4) sur l'afficheur tactile (118) en utilisant un quatrième capteur (122) du dispositif électronique (100), la première valeur de force (F1), la deuxième valeur de force (F2), la troisième valeur de force (F3) et la quatrième valeur de force (F4) étant déterminées à un instant auquel le premier contact (T1) et le deuxième contact (T2) sont tous deux détectés ; dans lequel les premier, deuxième, troisième et quatrième capteurs (122) sont situés chacun à proximité d'un coin respectif de l'afficheur tactile ;
le premier capteur et le deuxième capteur définissant un axe de coordonnée X et le premier capteur et le troisième capteur définissant un axe de coordonnée Y, où l'axe X et l'axe Y sont orthogonaux ;
la détermination des distances, le long des axes de coordonnées (X, Y), par rapport aux capteurs (122), des emplacements de chacun du premier contact (T1) et du deuxième contact (T2) ; et

la détermination d'une première valeur de force appliquée (FT1) pour le premier contact (T1) et d'une deuxième valeur de force appliquée (FT2) pour le deuxième contact (T2) en utilisant une technique d'équilibre des forces, dans lequel la technique d'équilibre des forces utilise la première valeur de force (F1), la deuxième valeur de force (F2), la troisième valeur de force (F3) et la quatrième valeur de force (F4) ; et en utilisant une technique d'équilibre des couples, dans lequel la technique d'équilibre des couples utilise la première valeur de force (F1), la deuxième valeur de force (F2), la troisième valeur de force (F3) et la quatrième valeur de force (F4), et ladite distance déterminée de chaque contact.

2. Procédé selon la revendication 1, comprenant en outre la détermination d'une orientation du dispositif électronique (100), dans lequel la détermination de la première valeur de force (F1) et de la deuxième valeur de force (F2) comprend la compensation de l'orientation du dispositif électronique (100) sur la base de la gravité et d'une masse de l'afficheur tactile (118).

3. Procédé selon la revendication 1, comprenant en outre la détermination si une valeur de force appliquée plus grande est associée au premier emplacement (602) ou au deuxième emplacement (604).

4. Procédé selon la revendication 1, comprenant en outre la détermination d'une entrée sur la base de la première valeur de force appliquée (FT1) et de la deuxième valeur de force appliquée (FT2).

5. Procédé selon la revendication 4, comprenant en outre l'exécution d'une fonction associée à l'entrée lorsque la plus grande de la première valeur de force appliquée (FT1) et de la deuxième valeur de force appliquée (FT2) satisfait à une valeur de force de seuil.

6. Support pouvant être lu par un ordinateur comportant un code pouvant être lu par un ordinateur exécutable par au moins un processeur (102) d'un dispositif électronique (100) pour mettre en oeuvre le procédé selon l'une quelconque des revendications 1 à 5.

7. Dispositif électronique (100) comprenant :

un afficheur tactile (118) ;

un premier capteur de force (122), un deuxième capteur de force (122), un troisième capteur de force (122) et un quatrième capteur de force (122) ;

un processeur (102) couplé au premier capteur de force (122), au deuxième capteur de force (122), au troisième capteur de force (122) et au quatrième capteur de force (122), et à l'afficheur tactile (118), dans lequel les premier, deuxième, troisième et quatrième capteurs (122) sont situés chacun à proximité d'un coin respectif de l'afficheur tactile (118), le premier capteur et le deuxième capteur définissant un axe de coordonnée X et le premier capteur et le troisième capteur définissant un axe de coordonnée Y, où l'axe X et l'axe Y sont orthogonaux, dans lequel le dispositif est en outre configuré pour :

détecter un premier contact (T1) à un premier emplacement (602) et un deuxième contact (T2) à un deuxième emplacement (604) sur l'afficheur tactile (118) ;

déterminer une première valeur de force (F1) sur l'afficheur tactile (118) en utilisant le premier capteur de force (122), une deuxième valeur de force (F2) sur l'afficheur tactile (118) en utilisant le deuxième capteur de force (122), une troisième valeur de force (F3) en utilisant le troisième capteur de force (122) et une quatrième valeur de force (F4) en utilisant le capteur de force (122), dans lequel la première valeur de force (F1), la deuxième valeur de force (F2), la troisième valeur de force (F3) et la quatrième valeur de force (F4) sont déterminées à un instant auquel le premier contact (T1) et le deuxième contact (T2) sont tous deux détectés ;

déterminer les distances, le long des axes de coordonnées (X, Y), de chacun du premier contact (T1) et du deuxième contact (T2) par rapport aux capteurs (122) ; et

déterminer une première valeur de force appliquée (FT1) pour le premier contact (T1) et une deuxième valeur de force appliquée (FT2) pour le deuxième contact (T2) en utilisant une technique d'équilibre des forces, dans lequel la technique d'équilibre des forces utilise la première valeur de force (F1), la deuxième valeur de force (F2), la troisième valeur de force (F3) et la quatrième valeur de force (F4), et en utilisant une technique d'équilibre des couples, dans lequel la technique d'équilibre des couples utilise la première valeur de force (F1), la deuxième valeur de force (F2), la troisième valeur de force (F3) et la quatrième valeur de force (F4), et ladite distance déterminée de chaque contact.

**8.** Dispositif électronique selon la revendication 7, comprenant en outre un accéléromètre (136) configuré pour déterminer une orientation du dispositif électronique (100), dans lequel le processeur (102) ajuste la première valeur de force (F1) et la deuxième valeur de force (F2) pour compenser la force de gravité et une masse de l'afficheur tactile (118), sur la base de l'orientation du dispositif électronique (100).

**9.** Dispositif électronique (100) selon la revendication 7, dans lequel chacun du premier capteur de force (122), du deuxième capteur de force (122), du troisième capteur de force (122) et du quatrième capteur de force (122) est positionné à proximité d'un coin respectif de l'afficheur tactile (118).

FIG. 1

**100**

**202**

**122**
**120**

**202**

**122**
**120**

## FIG. 2

**118**

**122**
**120**

**122**

**120**

| ☏ | MENU | ← | ☏ |

**118**   **112**   **114**   **100**

**306**   **122**

**304**

**302**

## FIG. 3

FIG. 4

START

DETECT TOUCH(ES) ON TOUCH SCREEN — 502

OBTAIN FORCES AT SENSORS — 504

DETERMINE APPLIED FORCE(S) AT TOUCH LOCATIONS — 506

NO — APPLIED FORCE EXCEEDS THRESHOLD? — 508

YES

PERFORM ASSOCIATED FUNCTION — 510

END

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010013777 A
- US 2010053116 A
- CA 2316067
- EP 2241955 A